# EUROPÄISCHE PATENTSCHRIFT

(11) **EP 0 698 883 B1**
(45) Veröffentlichungstag und Bekanntmachung des Hinweises auf die Patenterteilung: **14.06.2000**
(21) Anmeldenummer: 95112212.6
(22) Anmeldetag: 03.08.1995
(51) Int. Cl.: G11B 33/04

(54) **Vepackung für ein scheibenförmiges Speichermedium**
Holder for a disc-like recording medium
Emballage pour support d'enregistrement en forme de disque

(30) Priorität: 30.03.1995 DE 29505432 U; 25.08.1994 DE 9413746 U
(43) Veröffentlichungstag der Anmeldung: 28.02.1996
(73) Patentinhaber: topac MultimediaPrint GmbH, 33311 Gütersloh (DE)
(72) Erfinder: Raubenheimer, Reinhard, Dr., D-33335 Gütersloh (DE)
(74) Vertreter: Prietsch, Reiner, Dipl.-Ing.

(56) Entgegenhaltungen:
- EP-A- 0 474 095
- EP-A- 0 503 171
- EP-A- 0 542 155
- WO-A-93/24927
- DE-A- 4 237 535
- DE-U- 8 903 977
- DE-U- 29 505 432
- US-A- 5 186 327

## Beschreibung

Die Erfindung betrifft eine Klappkarton-Verpackung für ein scheibenförmiges, ein Mittelloch aufweisendes Speichermedium, mit einem vorderen und einem hinteren Kartondeckel, die miteinander über einen Doppelfalzrücken verbunden sind, und mit einer auf der Innenseite des hinteren Kartondeckels befestigten, flachen Halterung für das Speichermedium, wobei die Halterung eine das Mittelloch des Speichermediums durchgreifende Rastvorrichtung umfaßt.

Derartige Klappkarton-Verpackungen sind bekannt. Die Halterung, die gewöhnlich als Tray bezeichnet wird, besteht aus einer im Spritzgießverfahren erzeugten, profilierten Kunststoffplatte, die etwa die gleichen Abmessungen wie der vordere und der hintere Kartondeckel des Klappkartons hat. Am häufigsten werden derartige Verpackungen für Compactdiscs, kurz CD's, verwendet. Eine umweltgerechte Entsorgung solcher Verpackungen ist ein ungelöstes Problem, denn die üblichen Kunststoffe, die für die Halterung verwendet werden, sind praktisch nicht verrottbar und führen bei Verbrennung häufig zur Bildung toxischer Stoffe. Andererseits ist eine Entsorgung durch ein geordnetes Recycling aus auf der Hand liegenden Gründen so gut wie undurchführbar.

Aus der EP 0 503 171 A1 ist eine Verpackung für einen scheibenförmigen, ein Mittelloch aufweisenden Aufzeichnungsträger bekannt. Diese Verpackung besteht aus einem Klappkarton aus mindestens zwei - einem hinteren und einem vorderen - Kartondeckeln und einem plattenförmigen Trageelement, das auf dem hinteren Kartondeckel angeordnet ist und über das der vordere Kartondeckel klappbar ist. Das Trageelement ist eine tiefgezogene, eigensteife Kunststoffolie mit einer muldenförmigen Vertiefung zur Aufnahme des Aufzeichnungsträgers sowie einer das Mittelloch des Aufzeichnungsträgers durchgreifenden Rastvorrichtung. Auch bei dieser Verpackung liegen die bereits angesprochenen Entsorgungsprobleme vor.

Aus der WO 93/24927 ist eine CD-Verpackung bekannt, die aus einem plattenförmigen Trageelement für die CD, das eine Tasche zur Aufnahme der CD bildet, und aus einem Booklet besteht, das längs einer Seite des Trageelements angelenkt ist. Die Verpackung kann aus biologisch abbaubarem Material bestehen, ist aber von der Handhabung nicht mit herkömmlichen CD-Verpackungen, wie Jewel-Boxes, vergleichbar. Vielmehr ist das Entnehmen und das Einstecken der CD äußerst unbequem.

Aus der EP 0 474 095 A1 ist eine Zusammensetzung für das Formen biologisch abbaubarer Gebrauchsgegenstände bekannt. Diese Zusammensetzung, die auch zur Herstellung von Verpackungsmaterialien geeignet ist, enthält wenigstens eine natürliche Stärke und maximal 40 Gew.-% Wasser.

Der Erfindung liegt die Aufgabe zugrunde, eine Verpackung der einleitend angegebenen Gattung zu schaffen, die problemlos, z.B. über den Hausmüll, entsorgbar ist.

Diese Aufgabe ist erfindungsgemäß dadurch gelöst, daß die Halterung zumindest zum weitaus überwiegenden Teil aus einem polymeren Werkstoff besteht, der mindestens 25 und höchstens 80 Gew.-% Starke und im übrigen Zuschlagstoffe umfaßt, die zumindest weitestgehend biologisch abbaubar sind und daß die Halterung einstückig aus einem annähernd quadratischen, vier Schenkel umfassenden Rahmen und einem die Mitten von zwei gegenüberliegenden Schenkeln verbindenden Quersteg besteht, der seinerseits in der Mitte die in das Mittelloch des Speichermediums eingreifende Rastvorrichtung trägt. Geeignete polymere, biologisch abbaubare Werkstoffe auf Stärkebasis und Verfahren zu deren Herstellung sind an sich bekannt, vergl. z.B. DE 43 17 696 A1, WO 90/05 161, WO 91/04 278, EP-A-0 539 544, DE 42 37 535 A1 und EP 0 542 155 A2, jeweils mit zahlreichen weiteren Fundstellen. Der besondere Vorteil der vorgeschlagenen Halterung ist ihre ökologische Unbedenklichkeit, uzw. auch dann, wenn sie nicht biologisch abgebaut (kompostiert) sondern verbrannt wird.

Zu den Zuschlagstoffen, deren Art und Menge sich nach den gewünschten oder erforderlichen herstellungstechnischen Bedingungen und Gebrauchseigenschaften der Halterung richten, gehören gemäß Anspruch 2 insbesondere biologisch abbaubare Polymere, hier insbesondere Copolymere eines Vinylalkohols, pflanzliche Fasern, Fluß- und gegebenenfalls Trennmittel, Wasser und Farbstoffe, sowie nötigenfalls Weichmacher.

Nicht geeignet als Zuschlagstoffe sind hingegen Kunststoffe des polyolefinen Typs, da diese praktisch nicht biologisch abbaubar (kompostierbar) sind.

Um zu vermeiden, daß der vordere Kartondeckel des Klappkartons auf dem Speichermedium aufliegt, soll die Dicke des Quersteges mindestens um die Scheibendicke des Speichermedium kleiner als die Dicke der Rahmenschenkel sein (Anspruch 3).

Um auch die andere Fläche des Speichermediums, die gewöhlich die ausgelesene Seite ist, weitgehend berührungsfrei in der Verpackung aufzunehmen, ist die Rastvorrichtung auf einem gegenüber dem Quersteg etwas erhöhten Sockel angeordnet, wie dies an sich bekannt ist (Anspruch 4).

Die Stabilität des Rahmens wird erhöht, wenn die Rahmenschenkel in den Ecken über Winkelsegmente verbunden sind (Anspruch 5). Zwischen den Winkelsegmenten und dem Rand des Speichermediums bleibt dennoch genügend Raum, um das Speichermedium bequem am Rand ergreifen und von der Rastvorrichtung abziehen zu können.

Eine verbesserte Lagefixierung des Speichermediums läßt sich durch dessen zusätzliche Unterstützung an zwei gegenüberliegenden Randbereichen, außerhalb des sogenannten Programmbereichs des Speichermediums, erzielen (Anspruch 6).

Bewährt hat sich eine Rastvorrichtung, die aus auf einem Kreis mit dem Durchmesser des Mittellochs des Speichermediums angeordneten, durch radiale Schlitze voneinander getrennten Segmenten besteht, von denen jedes einen ersten, sich rechtwinklig aus der Ebene des Quersteges erhebenden Schenkel und einen zweiten, an diesen anschließenden, zur Ebene des Quersteges parallelen und zum Zentrum des Mittellochs weisenden Schenkel hat (Anspruch 7).

Weil der für die Halterung des Speichermediums vorgeschlagene Werkstoff gewöhnlich weniger federelastisch und formstabil wie der bisher für solche Halterungen übliche Kunststoff ist, ist es zweckmäßig, die Enden der zweiten Schenkel der Segmente über einen Steg miteinander zu verbinden (Anspruch 8).

Um andererseits die Rastvorrichtung insgesamt nicht zu steif werden zu lassen, kann der die Enden der zweiten Schenkel der Segmente verbindende Steg an mindestens einer, gegebenenfalls aber auch mehreren Stellen eine Unterbrechung haben (Anspruch 9).

Wie sich gezeigt hat, können durch systematische Versuche auf der vorstehend genannten Basis von Stärke zahlreiche Rezepturen für den Werkstoff der Halterung gefunden werden, die es erlauben, die vorgeschlagene Halterung wie die bisherigen Kunststoffhalterungen als Spritzgußprofilteil herzustellen (Anspruch 10).

Ein Ausführungsbeispiel einer Klappkarton-Verpackung nach dem vorliegenden Vorschlag wird nachfolgend anhand der Zeichnung beschrieben. Es zeigt:
- Figur 1: eine Aufsicht auf die aufgeklappte Verpackung,
- Figur 2: einen Schnitt längs der Linie II-II in Fig. 1 und
- Figur 3: die Rastvorrichtung der Halterung in vergrößertem Maßstab.

Die in den Figuren dargestellte Klappkartonverpackung für ein nichtgezeichnetes Speichermedium, wie beispielsweise eine CD, umfaßt einen vorderen Kartondeckel 1 und einen hinteren Kartondeckel 3, die miteinander über einen Doppelfalzrücken 2 verbunden sind. Auf der Innenseite des hinteren Kartondeckels ist eine flache Halterung 4 für die CD befestigt, z.B. aufgeklebt. Die Halterung 4 besteht aus einem weitestgehend biologisch abbaubaren, spritzgießfähigen Werkstoff auf Stärkebasis.

Die Halterung 4 hat im wesentlichen die Form eines annähernd quadratischen Rahmens mit vier Schenkeln 4a bis 4d. Die Mitten der gegenüberliegenden Schenkel 4b, 4d sind über einen Quersteg 5 verbunden, der seinerseits in der Mitte die in das Mittelloch der CD eingreifende Rastvorrichtung 6 trägt.

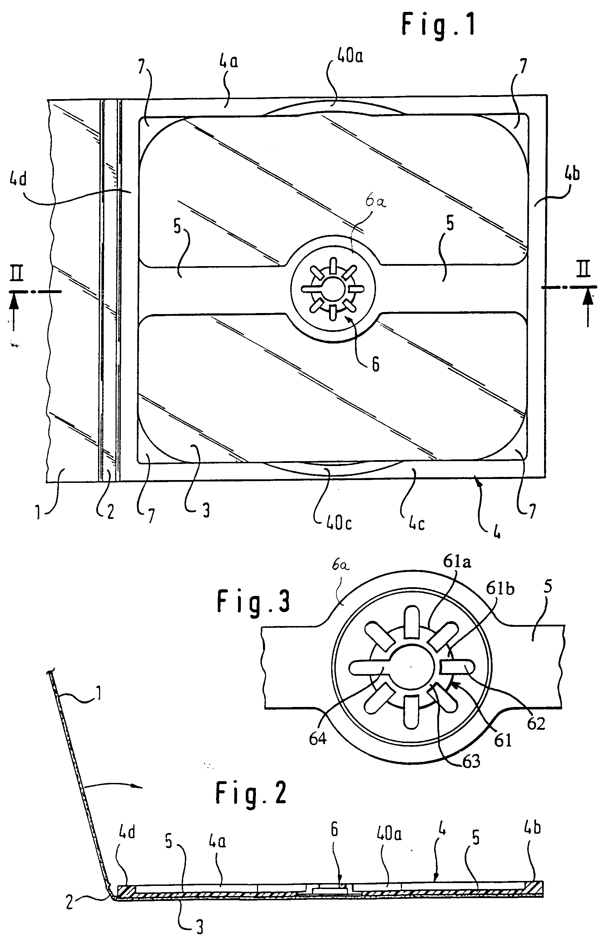

Diese in Figur 3 genauer dargestellte Rastvorrichtung 6 besteht aus auf einem Kreis mit dem Durchmesser des Mittellochs des Speichermediums angeordneten Segmenten 61, die voneinander durch radiale Schlitze 62 getrennt sind. Jedes der Segmente 61 umfaßt einen ersten, sich rechtwinklig aus der Ebene des Quersteges 5 erhebenden Schenkel 61a und einen zweiten, an diesen anschließenden, zur Ebene des Quersteges 5 parallelen und zum Zentrum des Mittellochs weisenden Schenkel 61b. Die Enden der zweiten Schenkel 61b sind über einen Steg 63 miteinander verbunden, der an einer Stelle eine Unterbrechung 64 hat. Der Steg 63 sorgt für die notwendige Formstabilität der Rastvorrichtung 6, deren elastische Eigenschaften durch die Breite des Steges 63 sowie durch dessen Unterbrechung bei 64 bestimmt werden. Je nach den Werkstoffeigenschaften kann der Steg 63 also auch mehrere solcher Unterbrechungen 64 haben.

Die Dicke des Quersteges 5 ist, wie insbesondere aus Figur 2 erkennbar, mindestens um die Dicke der CD kleiner als die Dicke der Rahmenschenkel 4a bis 4d, so daß die Innenseite des vorderen Kartondeckel 1 im zugeklappten Zustand normalerweise nicht auf der sogenannten Labelseite der CD sondern nur auf den Rahmenschenkeln aufliegt.

Die Rastvorrichtung 6 ist auf einem Sockel 6a angeordnet, der eine Stärke von einigen zehntel Millimetern hat und dessen Durchmesser auf den programmfreien, inneren Ringbereich der CD abgestimmt ist.

Eine ausreichende Stabilität der Halterung trotz vergleichsweise geringen Querschnittes der Rahmenschenkel wird dadurch erreicht, daß die Rahmenschenkel 4a bis 4d in den jeweiligen Ecken über Winkelsegmente 7 verbunden sind, die ihrerseits die gleiche Dicke wie der Quersteg 5 haben können und damit nur etwa ein Drittel so stark wie die Rahmenschenkel sind.

Das lichte Innenmaß zwischen den Rahmenschenkeln 4a und 4c ist etwas kleiner und das entsprechende Außenmaß etwas größer als der Durchmesser einer CD. Des weiteren haben die Rahmenschenkel 4a und 4c je eine kreissegmentförmige Ausnehmung 40a bzw. 40c, entsprechend dem von dem Rand der CD überdeckten Bereich der betreffenden Rahmenschenkel. Im Bereich dieser Ausnehmungen 40a und 40c ist die Materialstärke der Rahmenschenkel 4a bzw. 4c auf diejenige des Quersteges 5 (und der Winkel 7) verringert. Die Segmente 40a bzw. 40c unterstützen also die CD zusätzlich an zwei gegenüberliegenden Umfangsrandbereichen.

## Patentansprüche

1. Klappkarton-Verpackung für ein scheibenförmiges, ein Mittelloch aufweisendes Speichermedium, mit einem vorderen und einem hinteren Kartondeckel (1, 3), die miteinander über einen Doppelfalzrücken (2) verbunden sind, und mit einer auf der Innenseite des hinteren Kartondeckels befestigten, flachen Halterung (4) für das Speichermedium, wobei die Halterung eine das Mittelloch des Speichermediums durchgreifende Rastvorrichtung (6) umfaßt, **dadurch gekennzeichnet**, daß die Halterung (4) aus einem Werkstoff besteht, der mindestens 25 und höchstens 80 Gew.% Stärke und im übrigen Zuschlagstoffe umfaßt, die zumindest weitestgehend biologisch abbaubar sind, und daß die Halterung (4) einstückig aus einem annähernd quadratischen, vier Schenkel (4a bis 4d) umfassenden Rahmen und einem die Mitten von zwei gegenüberliegenden Schenkein (4b, 4d) verbindenden Quersteg (5) besteht, der seinerseits in der Mitte die in das Mittelloch des Speichermediums eingreifende Rastvorrichtung (6) trägt.

2. Verpackung nach Anspruch 1, dadurch gekennzeichnet, daß die Zuschlagstoffe ausgewählt sind aus mindestens einer der Gruppen
- biologisch abbaubare Polymere
- pflanzliche Fasern
- Flußmittel
- Trennmittel
- Wasser
- Farbstoffe.

3. Verpackung nach Anspruch 1 oder 2, dadurch gekennzeichnet, daß die Dicke des Quersteges (5) mindestens um die Scheibendicke des Speichermediums kleiner als die Dicke der Rahmenschenkel (4a bis 4d) ist.

4. Verpackung nach einem der Ansprüche 1 bis 3, dadurch gekennzeichnet, daß die Rastvorrichtung (6) auf einem Sockel (6a) angeordnet ist, dessen dem Speichermedium zugewandte Fläche in einer von der die entsprechende Fläche des Quersteges (5) enthaltenden Ebene beabstandeten Parallelebene liegt.

5. Verpackung nach einem der Ansprüche 1 bis 4, dadurch gekennzeichnet, daß die Rahmenschenkel (4a bis 4d) in den Ecken über Winkelsegmente (7) verbunden sind.

6. Verpackung nach einem der Ansprüche 1 bis 5, dadurch gekennzeichnet, daß das Innenmaß zwischen zwei gegenüberliegenden Rahmenschenkeln (4a, 4c) kleiner und das Außenmaß größer als der Durchmesser des Speichermediums sind und daß diese Rahmenschenkel (4a, 4c) in ihrem von dem Rand des Speichermediums überdeckten Bereich je eine kreissegmentförmige Ausnehmung (40a, 40c) haben.

7. Verpackung nach einem der Ansprüche 1 bis 6, dadurch gekennzeichnet, daß die Rastvorrichtung (6) aus auf einem Kreis mit dem Durchmesser des Mittellochs des Speichermediums angeordneten, durch radiale Schlitze (62) voneinander getrennten Segmenten (61) besteht, von denen jedes einen ersten, sich rechtwinklig aus der Ebene des Quersteges (5) erhebenden Schenkel (61a) und einen zweiten, an diesen anschließenden, zur Ebene des Quersteges (5) parallelen und zum Zentrum des Mittellochs weisenden Schenkel (61b) hat.

8. Verpackung nach Anspruch 7, dadurch gekennzeichnet, daß die Enden der zweiten Schenkel (61b) der Segmente (61) über einen Steg (63) miteinander verbunden sind.

9. Verpackung nach Anspruch 7 oder 8, dadurch gekennzeichnet, daß der die Enden der zweiten Schenkel (61b) der Segmente (61) verbindende Steg (63) an mindestens einer Stelle eine Unterbrechung (64) hat.

10. Verpackung nach einem der Ansprüche 1 bis 9, dadurch gekennzeichnet, daß die Halterung (4) ein Spritzgußprofil teil ist.

## Claims

1. A folded card packaging for a storage medium in the form of a disc and having a central hole, comprising a front and a rear card cover (1, 3) which are connected together by way of a double fold back (2), and a flat holder (4) fixed on the inside of the rear card cover, for the storage medium, wherein the holder includes a retaining device (6) which engages through the central hole of the storage medium, characterised in that the holder (4) comprises a material which includes at least 25 and at most 80% by weight of starch and for the rest additives which are at least very substantially biologically decomposable, and that the holder (4) integrally comprises an approximately square frame having four limbs (4a to 4d) and a transverse web (5) which connects the centres of two oppositely disposed limbs (4b, 4d) and which in turn at the centre carries the retaining device (6) which engages into the central hole of the storage medium.

2. A packaging according to claim 1 characterised in that the additives are selected from at least one of the groups:
- biologically decomposable polymers
- vegetable fibres
- flow agents
- separating agents
- water
- dyestuffs.

3. A packaging according to claim 1 or claim 2 characterised in that the thickness of the transverse web (5) is smaller than the thickness of the limbs (4a to 4d) of the frame at least by the disc thickness of the storage medium.

4. A packaging according to one of claims 1 to 3 characterised in that the retaining device (6) is arranged on a base (6a) whose surface which is towards the storage medium is in a parallel plane spaced from the plane containing the corresponding surface of the transverse web (5).

5. A packaging according to one of claims 1 to 4 characterised in that the limbs (4a to 4d) of the frame are connected in the corners by way of angle segments (7).

6. A packaging according to one of claims 1 to 5 characterised in that the inside dimension between two oppositely disposed limbs (4a, 4c) of the frame is smaller than the diameter of the storage medium and the outside dimension is larger than the diameter of the storage medium and that said limbs (4a, 4c) of the frame each have a respective opening (40a, 40c) in the form of a segment of a circle in their region which is covered by the edge of the storage medium.

7. A packaging according to one of claims 1 to 6 characterised in that the retaining device (6) comprises segments (61) which are arranged on a circle of the diameter of the central hole of the storage medium and which are separated from each other by radial slots (62) and each of which has a first limb (61a) which rises at a right angle out of the plane of the transverse web (5) and a second limb (61b) which adjoins the first limb and which is parallel to the plane of the transverse web (5) and which faces towards the centre of the central hole.

8. A packaging according to claim 7 characterised in that the ends of the second limbs (61b) of the segments (61) are connected together by way of a web (63).

9. A packaging according to claim 7 or claim 8 characterised in that the web (63) connecting the ends of the second limbs (61b) of the segments (61) has an interruption (64) at at least one location.

10. A packaging according to one of claims 1 to 9 characterised in that the holder (4) is an injection moulded member.

## Revendications

1. Emballage-carton à rabat destiné à un support d'enregistrement en forme de disque qui présente un trou central, comprenant un couvercle en carton avant et un couvercle en carton arrière (1, 3) de la boîte, qui sont reliés l'un à l'autre par un dos à double charnière (2), et un maintien plat (4) pour le support d'enregistrement fixé sur le côté intérieur du couvercle en carton arrière, dans lequel le maintien comprend un dispositif de pose (6) qui traverse le trou central du support d'enregistrement, caractérisé en ce que le maintien (4) est composé en un matériau qui comprend au moins 25 et au plus 80 % en poids d'amidon et, pour le reste, des charges, qui sont du moins dans une très grande mesure, biodégradables, et en ce que le maintien (4) est constitué en un seul tenant, d'un cadre à peu près carré comprenant quatre côtés (4a à 4d) et une traverse (5) qui relie les milieux de deux côtés opposés (4b, 4d) et qui, pour sa part, porte au milieu le dispositif de pose (6) qui s'engage dans le trou central du support d'enregistrement.

2. Emballage selon la revendication 1, caractérisé en ce que les charges sont choisies dans au moins l'un des groupes suivants :
- polymères biodégradables
- fibres végétales
- fluidifiants
- agents de démoulage
- eau
- colorants.

3. Emballage selon la revendication 1 ou 2, caractérisé en ce que l'épaisseur de la traverse (5) est inférieure à l'épaisseur des côtés du cadre (4a à 4d) d'au moins l'épaisseur de disque du support d'enregistrement.

4. Emballage selon l'une des revendications 1 à 3, caractérisé en ce que le dispositif de pose (6) est disposé sur un socle (6a) dont la face dirigée vers le support d'enregistrement se trouve dans un plan parallèle espacé du plan contenant la face correspondante de la traverse (5).

5. Emballage selon l'une des revendications 1 à 4, caractérisé en ce que les côtés du cadre (4a à 4d) sont reliés dans les angles par des segments en équerre (7).

6. Emballage selon l'une des revendications 1 à 5, caractérisé en ce que la cote intérieure entre deux côtés opposés du cadre (4a, 4c) est plus petite, et la cote extérieure plus grande, que le diamètre du support d'enregistrement, et en ce que ces côtés du cadre (4a, 4c) présentent chacun un évidement (40a, 40c) en forme d'arc de cercle dans leur zone recouverte par le bord du support d'enregistrement.

7. Emballage selon l'une des revendications 1 à 6, caractérisé en ce que le dispositif de pose (6) est composé de segments (61) séparés les uns des autres par des fentes radiales (62) disposés sur un cercle avec le diamètre du trou central du support d'enregistrement, et dont chacun possède un premier côté (61a) qui s'élève perpendiculairement à partir du plan de la traverse (5), et un deuxième côté (61b) qui s'y raccorde et qui est parallèle au plan de la traverse (5) et se dirige vers le centre du trou central.

8. Emballage selon la revendication 7, caractérisée en ce que les extrémités du deuxième côté (61b) des segments (61) sont reliés entre eux par une entretoise (63).

9. Emballage selon la revendication 7 ou 8, caractérisé en ce que l'entretoise (63) qui relie les extrémités du deuxième côté (61b) des segments (61) présente une interruption (64) en au moins un endroit.

10. Emballage selon l'une des revendications 1 à 9, caractérisé en ce que le maintien (4) est une pièce profilée moulée par injection.
